# EUROPEAN PATENT SPECIFICATION

(11) **EP 0 590 746 B1**
(45) Date of publication and mention of the grant of the patent: **21.01.1998**
(21) Application number: 93250262.8
(22) Date of filing: 24.09.1993
(51) Int. Cl.: C02F 1/50, C02F 3/34, F28G 9/00, F28F 19/00, F16L 58/00

(54) **Proteases to inhibit and remove biofilm**
Proteasen zur Inhibierung und Beseitigung von Biofilm
Protéases pour inhiber et éliminer la formation d'un film biologique

(30) Priority: 28.09.1992 US 951974
(43) Date of publication of application: 06.04.1994
(73) Proprietor: BetzDearborn, Inc., Trevose, PA 19053 (US)
(72) Inventor: Aldridge, Irene Yeatman, Laurel, MD 20723 (US); Chmurny, Alan Bruce, Frederick, MD 21701 (US); Durham, Donald Richard, Gaithersburg, Maryland 20760 (US); Roberts, Rowena Lisa, Maryland 20882 (US); Fan, Lai-Duien Grace, Lake Zurich, Ill. 60047 (US)
(74) Representative: UEXKÜLL & STOLBERG

(56) References cited:
- EP-A- 0 372 520
- EP-A- 0 388 115
- WO-A-92/13807
- DE-A- 3 741 583
- US-A- 4 936 994
- US-A- 4 994 390
- US-A- 5 071 765

## Description

### Field of the Invention

The present invention relates to a method of inhibiting and/or removing biofilm from surfaces which are in contact with an aqueous system and more particularly to the use of proteases in aqueous systems to inhibit and/or remove biofilm.

### Background of the Invention

Cooling water systems, particularly open recirculating systems, offer favorable environments for growth of microbial forms, hereinafter referred to as biofilm. The deposition of biofilm onto the surfaces of aqueous systems can lead to decreased efficiency of heat transfer surfaces, plugging of tubes, and corrosion within the system. The composition of biofilm deposits on a fouled surface generally consists primarily of bacteria. Of the bacterial genera found in biofilm, Gram negative species are predominant, especially Pseudomonas, Acinetobacter, and Aerobacter. Other genera found in biofilm may include Flavobacterium, Desulfovibrio, Escherichia, and in small numbers, several Gram positive genera such as Bacillus and Sarcina.

The cell wall structure of Gram negative bacteria is an important factor contributing to biofilm formation. The cell wall consists of a peptidoglycan comprised of acetyl-amino sugars and amino acids, and an outer membrane comprised of proteins, lipopolysaccharides, and lipoproteins. In contrast, the cell wall structure of Gram positive bacteria are predominately composed of peptidoglycan and teichoic acids.

Microorganisms also produce extensive slime layers or capsules which vary in composition. Except for a very few instances, all of the slime produced by bacteria is some form of polysaccharide such as dextrans, glucans, or polyuronides. The volume of slime produced by a single bacterium may be as much as four times the volume of a single bacterium. Costerton et al named the slime layer the "glycocalyx" due to a compositional similarity with certain carbohydrate rich animal cells. The glycocalyx is formed from almost all the bacteria observed in biofilms and provides several important mechanisms for attachment to surfaces. First, the glycocalax provides a buffer zone between the surface and the bacterium which reduces electrostatic repulsion that would otherwise prevent contact, and secondly, polymers in the glycocalax can form physical and/or electrostatic bonding to surface substrates. Based on experimental evidence, the development of natural biofilms on a surface involves a succession of bacterial genera which build different layers within the biofilm. Although the matrix of the biofilm may be of heterogenous composition, it is primarily composed of polysaccharides. This has oriented research efforts to evaluate polysaccharidases (carbohydrases) and lipases (for lipopolysaccharide and lipoprotein components) for potential biofilm removal.

US-A-4 936 994 discloses the use of a composition consisting of cellulase, α-amylase and protease for removing biofilm. WO-A-92/13807 proposes to remove biofilm by contacting the biofilm-covered surfaces with (1) at least one acidic protease or alkaline protease, (2) at least one glucoamylase or α-amylase, and (3) at least one surfactant. The combination is said to be able to destroy the polysaccharide material which surrounds sessile microorganisms. EP-A-0 372 520 discloses that microorganisms which do not produce biofilm can be added to a water system to reduce the amount of organic compounds therein. This should in turn reduce the growth of biofilm-producing microorganisms.

Protease-containing cleaning compositions are well known in the art. Such compositions are commercially available, and are described in a large body of art. Representative of this literature are U.S. Patent Nos. RE 30,602; 3,553,139; 3,674,643; 3,697,451; 3,748,233; 3,790,482; 3,827,938; 3,871,963; 3,931,034; 4,162,987; 4,169,817; 4,287,101; 4,429,044; 4,480,037; 4,511,490; 4,515,705 and 4,543,333; as well as *Innovations in Biotechnology,* edited by E. H. Houwink and R. R. van der Meer, pages 31 to 52 (Elsevier Science Publishers, Amsterdam, 1984).

The most widely employed proteases in cleaning compositions are the alkaline proteases derived from various strains of Bacillus. Such proteases, which are marketed under tradenames such as Esperase® and Alcalase® from Novo Nordisk Bioindustrials Inc., Danbury, Conn. and Maxatase® and Maxacal® from Gist-Brocades, Charlotte, N.C., have desirable alkaline stability properties and proteolytic activities.

U.S. Patent No. 4,865,983 describes the use of a protease produced by *Vibrio proteolyticus* (ATCC 53559) (hereinafter referred to as "vibriolysin") in cleaning compositions. A large number of various other proteases and their respective utilities are also described in Cowan et al., *Trends in Biotechnology,* Vol. 3, No. 3, pages 68-72 (1985).

### Summary of the Invention

It is an object of this invention to provide a non-hazardous, ecologically safe method for inhibiting and/or removing biofilm from surfaces in contact with aqueous systems.

It is another object of this invention to provide a novel composition comprising a combination of proteases and surfactants for use in preventing biofilm from accumulating onto surfaces which are in contact with aqueous systems.

Another object of this invention is to provide a method for removing biofilm from surfaces in industrial aqueous systems such as cooling tower systems using compositions which are compatible with and efficacious for use in combination with other conventional water treatment agents such as corrosion inhibitors, scale inhibitors, biocides, dispersants, and the like.

In accordance with the present invention, there has been provided a method for inhibiting and/or removing biofilm from surfaces which are in contact with an aqueous system comprising adding to the system an enzyme composition consisting essentially of protease in a dosage amount which is effective to inhibit or remove biofilm deposits, wherein the protease is Esparase® or a metalloprotease selected from the group of vibriolysin, Thermoase, Neutrase® and mixtures thereof.

Also provided in accordance with this invention is a composition for inhibiting or removing biofilm deposits on surfaces which are in contact with an aqueous system comprising protease and a surfactant in a ratio of unit of protease activity weight of surfactant in the range of 0.001:1 to 100:1, which composition does not contain amylase.

Further provided in accordance with this invention is a method for inhibiting or removing biofilm deposits on surfaces which are in contact with an aqueous system comprising adding to the system a composition consisting of a protease and a surfactant, in a dosage amount which is effective to inhibit or remove the biofilm deposit, which composition does not contain amylase.

The invention also provides a method for inhibiting or removing biofilm deposits from surfaces which are in contact with an aqueous system which comprises the sequential steps of 1) adding to the aqueous system an enzyme composition consisting essentially of proteases, 2) circulating the enzyme composition through the aqueous system to permit contact of the enzyme composition with the biofilm deposits, and 3) adding at least one lipase, carbohydrase or mixture thereof to the aqueous system, and wherein the enzyme composition and the lipase, carbohydrase or mixture thereof are added in amounts sufficient to inhibit or remove the biofilm deposits.

### Detailed Description

The present invention is directed to certain novel methods and compositions for inhibiting or removing biofilm from surfaces which are in contact with aqueous systems. As used herein, the terminology "inhibiting or removing biofilm" refers to inhibiting the adherence of the biofilm and not to biocidal activity which would actively kill the microbiological organisms present in the aqueous system. The method comprises adding to an aqueous system, an enzyme composition consisting essentially of proteases in an amount effective to inhibit or remove biofilm from surfaces in contact with an aqueous system. These enzyme compositions may optionally contain various surfactants to provide additional biofilm removal. The enzyme compositions of this invention may also be used in combination with certain other enzymes as hereinafter defined, in amounts effective to provide further enhanced inhibition or removal of biofilm.

The methods and enzyme compositions of this invention consist essentially of proteases as the primary active treating component. That is, it has now been discovered that proteases alone provide effective inhibition of biofilm deposits and thus the presence of other enzymes such as cellulase or amylase are not required for biofilm inhibition. These other enzymes were heretofore believed to be necessary for biofilm inhibition. Thus, in accordance with the present invention, the methods and enzyme compositions consist essentially of proteases and are substantially free of other enzymes such as cellulase, amylase and the like.

The effectiveness of the protease compositions of the present invention for inhibiting biofilm in aqueous systems was surprising and unexpected since the adherence of biofilms was believed to be due to polysaccharide constituents which should not be affected by proteases.

Suitable proteases for use in this invention include, but are not limited to serine proteases such as Esperase® (Novo), Alcalase® (Novo), subtilisin (Sigma), Maxatase® (Gist-Brocade), Maxacal® (Gist-Brocade), trypsin (Sigma), metalloproteases such as vibriolysin (W.R. Grace), thermolysin (Sigma), Thermoase (Daiwa Kasei KK), Novo TS (Novo), Neutrase® (Novo), SP-369 (Novo), Protease 2A (Amano), Seaprose S (Amano), Prozyme 6® (Amano), cysteine proteases such as papain, aspartic proteases and the like, and mixtures thereof such as, for example, a mixture of serine and metalloproteases which is commercially available from Sigma under the trademark Pronase®.

Proteases are commercially available in several forms including powders, granulates, slurries and liquids. Since the present invention is primarily directed to treating aqueous systems, a slurry or liquid form of protease is preferred, however, in general, any protease is suitable for use in this invention. A particular advantage to the methods and compositions of the present invention is the stability of proteases in aqueous systems in the presence of other water treatment compositions such as oxizing agents, biocides, scale inhibitors, corrosion inhibitors, optical brighteners, phosphates, phosphonates, polyphosphates, silicates, buffers, surfactants, carboxylates, sulfonates, and the like.

As is well known to those skilled in the art, certain proteases exhibit enhanced activity and increased stability under particular pH and temperature conditions. Thus, an important consideration for obtaining optimum results in accordance with the method of this invention is to select an appropriate protease which exhibits both high activity and good stability under the particular pH and temperature conditions of the particular aqueous system being treated. In this regard, it has been found that the protease vibriolysin excreted by Vibrio proteolyticus (ATCC 53559) as disclosed in U.S. Patent No. 4,865,983,, is particularly suitable for use in treating a wide range of aqueous systems due to its stability over broad pH and temperature ranges. In addition, vibriolysin exhibits excellent stability in the presence of oxidizing agents such as chlorine. Vibriolysin, Alcalase® and Esperase® are also particularly stable in the presence of other commonly used water treating agents including, but not limited to biocides, scale inhibitors, corrosion inhibitors, optical brighteners, phosphates, phosphonates, polyphosphates, silicates, buffers, surfactants, carboxylates, sulfonates, and the like. Thus, a preferred embodiment of this invention is directed to a method for inhibiting or removing biofilm from surfaces in contact with an aqueous system which comprises adding to the system a biofilm-inhibiting amount of a protease selected from the group consisting of vibriolysin, Alcalase® and Esperase®.

Those aqueous systems which may be advantageously treated with the biofilm inhibition and removal agents of this invention include, but are not limited to, cooling water systems such as, e.g., cooling towers, desalinization units, pulp and papermaking systems, gas scrubbers, and other recirculating water systems where biofilm deposits are known to form. The present invention is particularly useful in the treatment of cooling water systems which operate at temperatures between 15,6°C and 93,3°C [60°F and 200°F], particularly open recirculating cooling water systems which operate at temperatures of from about 26,6°C to 65,6°C [80°F to 150°F].

The enzyme compositions of this invention are added to the aqueous systems in amounts effective to inhibit or remove the biofilm. The precise dosage per se is not critical to the invention and may vary widely depending, to some extent, on the nature of the aqueous system being treated and the degree of protection desired. In general, however, the concentration of protease added to the aqueous system can be from 0.0001 U/ml to 100 U/ml wherein U is units of activity as described more fully in Example 4. Within this dosage range, generally low dosages of 0.0005 to 1 U/ml are preferred. It is of course possible to add higher dosage amounts into systems containing excessive biofilm deposits. However, for purely economic reasons, these dosages are generally not recommended.

In general practice of this invention in industrial aqueous systems, it is preferred to initially add a higher "start-up" dosage to inhibit and/or remove existing biofilm deposits. The start-up dosage may then be followed by a lower "control" dosage in an amount sufficient to maintain a minimum inhibitory level. The start-up dosage can of course vary widely depending on the nature of the aqueous system being treated and the extent of any existing biofilm deposits in the system. The start-up dosage is preferably in the range of from .1 U/ml to 100 U/ml. The control dosage is preferably in the range of from .001 U/ml to 1 U/ml. The exact dosage required with respect to a particular aqueous system can be readily determined by one of ordinary skill in the art in conventional manners.

In another preferred embodiment, the method of this invention comprises adding an enzyme composition consisting essentially of proteases to the aqueous system in combination with one or more surfactants. Since both surfactants and proteases provide biofilm inhibition and removal characteristics, this particular combination has been found to provide enhanced biofilm inhibition and removal effects. Thus, in accordance with this aspect of the invention, there has been provided a novel composition for providing enhanced biofilm inhibition and/or removal from surfaces in contact with an aqueous system which comprises a combination of a protease and a surfactant. The relative proportions of these components in the composition is not considered critical per se to the invention, provided of course that the combined dosage amounts in the treated system are effective to inhibit or remove the biofilm deposits. In general, the surfactant is added to the system in a dosage range of from 0.001% to 1%, on a weight/volume basis. This dosage thus corresponds to an enzyme-surfactant composition having a ratio of (units of protease activity):(weight of surfactant) of from .0001:1 to 100:1, respectively, preferably from .005:1 to 10:1, respectively. The enzymes and surfactacts may be added separately to the aqueous system or may advantageously be added as a premixed composition having the above proportions.

Those surfactants which are suitable for use in this invention include cationic, non-ionic, anionic, ampholytic and zwitterionic surfactants. It is generally preferred to use a non-foaming surfactant or to use low concentrations of foaming surfactants. By way of illustration but not of limitation, suitable anionic surfactants include the water-soluble salts of alkyl benzene sulfonates, alkyl sulfates, alkyl polyethoxy ether sulfates, paraffin sulfonates, alpha-olefin sulfonates, alpha-sulfocarboxylates and their esters, alkyl glyceryl ether sulfonates, fatty acid monoglycerides sulfates and sulfonates, alkylphenol polyethoxy ether sulfates, 2-acyloxy-alkane-1-sulfonates, and beta-alkyloxy alkane sulfonates. Suitable nonionic surfactants include water soluble ethoxylate materials such as primary and secondary ethoxylates and alkylphenol ethoxylates.

In yet another embodiment of this invention, further enhanced biofilm removal may be achieved by the addition of the above protease enzyme compositions to the aqueous system followed by a subsequent addition of lipases, carbohydrases, or mixtures thereof. In accordance with this embodiment of the invention, there has now been provided a method for inhibiting and/or removing biofilm deposits from surfaces which are in contact with an aqueous system which comprises the sequential steps of 1) adding to the aqueous system an enzyme composition consisting essentially of proteases optionally in combination with surfactants; 2) circulating the enzyme composition to permit contact of the enzyme composition with the biofilm deposits, and 3) adding to the aqueous system at least one lipase or carbohydrase or a mixture thereof, wherein the enzyme composition and the lipase and/or carbohydrase are added in amounts effective to inhibit or remove the biofilm deposits. The dosage amounts of the lipase, carbohydrase or mixture thereof corresponds to the foregoing protease dosage amounts.

Suitable lipases include Lipolase (Novo), Lipase P-30 (Amano), Lipase MAP-10 (Amano), Lipase N (Amano), Lipase AP12 (Amano), porcine pancreatic lipase (Sigma), Candida lipase (Sigma), Pseudomonas lipase (Amano), Rhizopus lipase (Amano), Mucor lipase (Amano), Aspergillas lipase (Amano) and the like.

Suitable carbohydrases include BAN 120L (Novo), Viscozyme 120L (Novo), Termamyl 120L (Novo), Cereflo 200L (Novo), Glucanase (Sigma), β-Glucuronidase (Sigma), Maxamyl (Gist-Brocade), Cellulase (Sigma), Dextranase (Amano), Pectinase P-II (Amano), Cellulase TAP (Amano), and Cytophaga Gluconase (Sigma).

Without further elaboration, it is believed that one of ordinary skill in the art, using the preceding detailed description, can utilize the present invention to its fullest extent.

The following examples are provided to illustrate the invention in accordance with the principles of this invention, but are not to be construed as limiting the invention in any way except as indicated in the appended claims. All parts and percentages are by weight unless otherwise indicated.

### Example 1

### Preparation of Biofilm

Biofilm was produced using a consortium of 16 representative biofilm-producing microorganisms chosen from ∼200 microorganisms isolated from various cooling tower environments. The consortium consisted of organisms from different genera including Pseudomonas, Acinetobacter, Serratia, a thermophile and several members of the family Enterobacteriaceae. These strains have been maintained as pure cultures in a frozen state at -70°C.

The test surfaces used to establish biofilm formation were 40 mesh, 316 stainless steel wire mesh screen coupons racks within a stainless steel generator vessel.

The growth medium used in the biofilm generators consisted of synthetic cooling tower water (SCTW) containing: 4.7 mM MgSO₄, 23.4 mM NaCl, 11.5 mM Na₂SO₄, 4.4 mM NaHCO₃, 2.5 mM CaCl₂, 2.6 mM CaSO₄ · 2H₂O, and 0.3 mM Na₂SiO₃ · 9 H₂O. SCTW was supplemented with 2.25 g/l glycerol and 0.45 g/l Trypticase Soy Broth (TSB) solids. Biofilm generators were agitated, sparged with air, and maintained at 30°C and pH 7.2 - 7.8 by addition of acid or base during growth of biofilm. A period of seven to ten days was required for biofilm formation on the stainless steel coupons.

### Example 2

### Enzyme Treatment of Coupons

Fouled coupons were removed from the generator racks and briefly rinsed in clean SCTW to remove planktonic bacteria. The coupons in each treatment group were placed in two empty square petri dishes supported above the dish bottom by thin plastic strips. Protease or protease plus surfactant solutions were added to each dish to slightly cover the coupons. The dishes were placed on a gyrotary shaker and incubated at 40°C with gentle agitation (65 rpm) for 24 hours. After incubation with the test solution, each coupon was rinsed in clean SCTW to remove nonadherent biofilm.

In biofilm prevention experiments, protease or protease plus a surfactant was added directly to the biofilm generator after inoculation with the bacterial consortium. A control biofilm generator without added protease was started at the same time as the treated generator. Protease activity of the liquid was periodically monitored by use of one of the two assays described in Example 4. Additional enzyme was added as required to maintain the initial protease activity level. After seven to ten days, coupons from generators were removed and rinsed in clean SCTW prior to measurement of adherent biomass.

### Example 3

### Measurement of Adherent Biomass

At the completion of an experiment, the stainless steel coupons and their adherent biomass were rinsed in clean SCTW and allowed to air dry. The dried biomass was removed in a hot water solubilization step. The subsequent solution resulting from each coupon could be analyzed for total protein level per coupon by utilizing the BCA protein assay test kit commercially available from Pierce. This assay proved to be a satisfactory measurement of biofilm level based on comparisons between coupon protein levels and actual dry weight measurements of the total biomass on a coupon (see Table 1).

**Table 1**

| Comparison of Biofilm Removal As Measured by Total Protein, and Direct Dry Weight Measurements of Biofilm Determined After Enzyme Treatment | | |
|---|---|---|
| Treatment | % Protein Removed | % Dry weight Removed |
| 0.05% Neodol 25-7 | 16⁽¹⁾ | 11⁽¹⁾ |
| 1.0 U/ml Esperase® + 0.05% Neodol 25-7 | 69 | 64 |
| 0.1 U/ml Esperase® + 0.05% Neodol 25-7 | 30 | 26 |
| 0.01 U/ml Esperase® + 0.05% Neodol 25-7 | 25 | 14 |
| 0.001 U/ml Esperase® + 0.05% Neodol 25-7 | 30 | 17 |
| 0.0001 U/ml Esperase® + 0.5% Neodol 25-7 | 13 | 14 |

| | | |
|---|---|---|
| ⁽¹⁾ For biofilm removal to be statistically significant protein/dry weight removal had to be >12% (0.4 mg). | | |

### Example 4

### Measurement of Enzyme Activity

To standardize enzyme activity for each experiment in order to evaluate the efficacy of enzymes used in biofilm removal or prevention experiments and to measure the activity of an enzyme during a treatment incubation period, the following two assays were used to monitor protease activity:

### A. Azocasein Hydrolysis

A sample of protease is incubated for ten minutes at 37°C in 50 Mm Tris-HCl buffer (pH 7.4) containing 1.0 mg/ml of azocasein (sulfanilamide-azocasein, Sigma Corp., St. Louis, MO) with a final volume of 0.5 ml. At the end of this incubation period, 0.5 ml of 10% w/v trichloroacetic acid is added and immediately mixed and the resulting mixture is then stored on ice for 10 minutes. The mixture is then centrifuged and the optical density of the resulting supernatant is determined at 420 nm against a blank that contains either no enzyme or inactivated enzyme in the buffered azocasein solution. One unit of activity is defined as the amount of enzyme required to cause a change in absorbance of 2.5 at 420 nm.

### B. Peptidase Assay for Serine Proteases

This assay measures the increase in absorbance at 410 nm due to the release of *p*-nitroaniline from succinyl-L-alanyl-L-alanyl-L-prolyl-L-phenylalanyl-*p*-nitroanilide (sAAPFpN) as described in DelMar, E.G., et al., Anal. Biochem., 99:316 (1979). The reaction mixtures contained 1 mM sAAPFpN in 50 mM Tris buffer (pH 8.5) and a suitable amount of protease in a final volume of 1.0 ml.

### Example 5

### Preparation of Vibriolysin

Vibrio proteolyticus ATCC 53559 was cultured in a medium with the following composition (g or ml per liter): NZ-amine B, 40; Na₂SO₄, 25; dextrose, 10; K₂HPO₄, 4; MgSO₄ · 7 H₂O, 0.4; anti-foam agent, 0.1 ml; and 6.1 ml of trace elements solution. The trace element stock solution comprises (Grams per liter) the following: ZnSO₄ · 7H₂O, 18.29; MnCl₂ · 4H₂O, 18.86; CaSO₄ · 2H₂O, 0.91; HBO₃, 0.07; and Na₂MoO₄ · 2H₂O, 0.04. Prior to sterilization, pH was adjusted to 7.0.

V. proteolyticus was cultured in either 1.5- or 10-liter fermentors. Fermentors containing the aforementioned medium were inoculated with 1% (v/v) culture obtained by growing V. proteolyticus in shake flasks containing medium of the same composition for 20 hours. The fermentations were performed at 28°C, 1,000-1,250 rpm and an aeration of 1.0 volume of air per volume of medium per minute. The pH of the fermentation was maintained at pH 7.8 by the automatic addition of an acid or base titrant.

Growth of V. proteolyticus was monitored by measuring optical density at 640 nm, and protease activity was monitored by the azocasein assay described earlier. During the early stationary growth phase of the fermentation, the product protease reaches titers of approximately 85,200 to 127,800 azocasein units/liter. The broth was harvested by centrifugation to separate the cell portion.

The supernatant containing the proteolytic activity was concentrated using an Amicon S10Y10 spiral wound filter (Amicon Corp., Lexington, MA). The concentrate was diafiltered with 10 mM Tris buffer containing 1 mM CaCl₂ until the conductivity of the rententate was approximately 1 mS and the pH was neutral. This material was lyophilized and stored at -20°C until use.

### Example 6

### Biofilm Removal by Esperase® 8.0L

Fouled coupons as prepared in Example 1 were treated with solutions of Esperase® 8.0L in SCTW (pH 8.5) at 40°C for 24 hours. The dishes containing the coupons were swirled at 65 rpm to maintain a gentle movement of enzyme solution over the fouled surfaces. Addition of a surfactant such as Neodol 25-7 (nonionic, Shell Chemical) improved biofilm removal over the effect of enzyme alone. Enzyme activity is expressed as azocasein units/ml. The results are illustrated in Table 2.

**Table 2**

| Effect of Different Concentrations of Esperase 8.0L on Biofilm Removal | | |
|---|---|---|
| Treatment | Mg Protein Removed⁽¹⁾ | % Protein Removed |
| 0.05% Neodol 25-7 | 1.6 | 16 |
| 0.8 U/ml Esperase® (Heat Inactivated) | 0 | 0 |
| 0.8 U/ml Esperase⁽²⁾® | 3.1 | 31 |
| 0.8 U/ml Esperase® + 0.05% Neodol 25-7 | 5.0 | 50 |
| 1.0 U/ml Esperase® + 0.05% Neodol 25-7 | 5.2 | 52 |
| 5.0 U/ml Esperase® + 0.05% Neodol 25-7 | 4.4 | 44 |

| | | |
|---|---|---|
| Footnotes ⁽¹⁾ For biofilm removal to be statistically significant, protein removal had to be ≥1.3 mg protein (13% removal). | | |
| ⁽²⁾ One U/ml of Esperase® equals approximately 70 µg enzyme/ml. | | |

### Example 7

### Biofilm Removal by Alcalase® 2.4 L

Fouled coupons as prepared in Example 1 were treated with solutions of Alcalase® 2.4 L (Novo Nordisk Bioindustrials, Inc.) in SCTW (pH 8.5) at 40°C for 24 hours. The procedure described in Example 6 was repeated and the results are provided in Table 3.

**Table 3**

| Treatment | Mg Protein Removed⁽¹⁾ | % Protein Removed |
|---|---|---|
| 0.05% Neodol | 2.23 | 25.6 |
| 1.0 U/ml Alcalase® | 5.97 | 68.5 |
| 1.0 U/ml Alcalase® + 0.05% Neodol | 6.18 | 71.0 |

| | | |
|---|---|---|
| ⁽¹⁾ For biofilm removal to be statistically significant, protein removal had to be ≥1.56 mg protein or ≥17.9%. | | |

### Example 8

### Biofilm Removal by Vibriolysin

Fouled coupons were prepared in accordance with Example 1 and were treated with solutions of vibriolysin in SCTW (pH 8.5) at 40°C for 24 hours. The procedure described in Example 6 was repeated and the results are provided in Table 4.

**Table 4**

| Effect of Different Concentrations of Vibriolysin on Biofilm Removal | | |
|---|---|---|
| Treatment | Mg Protein Removed¹ | % Protein Removed |
| 0.05% Neodol 25-7 | 1.6 | 16 |
| 0.8 U/ml vibriolysin + 0.05% Neodol 25-7 | 3.2 | 32 |
| 1.0 U/ml vibriolysin + 0.05% Neodol 25-7 | 3.2 | 32 |
| 5.0 U/ml vibriolysin + 0.05% Neodol 25-7 | 4.0 | 40 |

| | | |
|---|---|---|
| ¹ For biofilm removal to be statistically significant, protein removal had to be ≥1.3 mg protein (13% removal). | | |

### Example 9

### Effect of Esperase® + Neodol Treatment on Prevention of Biofilm Formation

Experiments were conducted to assess enzymatic/surfactant treatment for prevention of biofilm formation. Two generators were set up and inoculated with the bacterial consortium as in Example 1. One generator was treated with 1 U/ml Esperase® and 0.01% Neodol 25-7 while the control generator received no supplements. Periodic addition of Esperase® was made to the treated generator to maintain a constant protease concentration. Periodic addition of nutrients was made to each generator to stimulate biofilm formation. After a ten-day period, the amount of biofilm remaining on coupons in each generator was determined by dry weights and total proteins (BCA method). Viable cell counts were made of the planktonic microbial population on Days 2, 4, and 8. The results, as provided in Tables 5 and 6, indicate that the microbial population was maintained at a constant level of 10⁸ viable cells/ml. Therefore, the treatment appears to be due to prevention of cell adherence to coupons rather than a biocidal action.

**Table 5**

| Effect of Enzymatic/Surfactant Treatment on the Prevention of Biofilm Formation | | | | | |
|---|---|---|---|---|---|
| Experiment | Treatment | Dry Weight (Avg. mg Per Coupon) | Biofilm % Reduction | Protein (mg/ml) | Protein Reduction (%) |
| One | None | 3.6 | | 5.4 | |
| | Esperase® + Neodol | 1.7 | 52.7 | 2.3 | 57.4 |
| Two | None | 3.3 | | 4.6 | |
| | Esperase® + Neodol | 1.4 | 57.6 | 3.0 | 34.8 |

**Table 6**

| Evaluation of Planktonic Microbial Population from Treated (Esperase/Neodol) and Untreated Biofilm Generators | | | | |
|---|---|---|---|---|
| | | Colony Forming Units/ml (x 10⁸) on day: | | |
| Experiment | Treatment | 2 | 4 | 8 |
| One | None | 6.5 | 6.1 | 8.3 |
| | Esperase® + Neodol | 6.9 | 7.0 | 2.7 |
| Two | None | 2.3 | 1.5 | 2.6 |
| | Esperase® + Neodol | 2.3 | 1.0 | 3.3 |

### Example 10

### Effect of Alcalase + Neodol Treatment on Prevention of Biofilm Formation

Two generators were set up and inoculated with the bacterial consortium as in Example 1. One generator was treated with 1 U/ml Alcalase® 2.4 L and 0.01% Neodol 25-7 while the control generator received no supplements. Periodic addition of Alcalase® was made to the treated generator to maintain a constant protease concentration. Periodic addition of nutrients was made as in Example 9. After an eight-day period, the biofilm remaining on coupons was determined as in Example 9.

**Table 7**

| Effect of Alcalase + Neodol on Preventing Biofilm Accumulation on Wire-Mesh Coupons Over an Eight-Day Period | | | | | |
|---|---|---|---|---|---|
| Treatment | Microorganisms¹ (CFU/ml X 10⁸) | Total Protein (mg/coupon) | Protein Reduction (%) | Dry Weight (mg) | Biofilm Reduction (%) |
| None | 5.0 | 6.7² | | 8.5² | |
| Alcalase® + Neodol | 5.7 | 2.7 | 59.7 | 2.0 | 76.5 |

| | | | | | |
|---|---|---|---|---|---|
| ¹ Colony-forming units of viable microorganisms per ml generator broth. | | | | | |
| ² Average for ten randomly selected coupons. | | | | | |

### Example 11

### Effect of Vibriolysin + Neodol Treatment on Prevention of Biofilm Formation

Two generators were set up and inoculated with the bacterial consortium as in Example 1. One generator was treated with 1 U/ml vibriolysin and 0.01% Neodol 25-7 while the control generator received no supplements. Vibriolysin was periodically added to the treated generator to maintain a constant protease concentration. Periodic addition of nutrients to both generators was made as in Example 9. After an eight-day period, the biofilm remaining on twelve coupons was determined as in Example 9.

**Table 8**

| Effect of Vibriolysin + Neodol on Preventing Biofilm Formation | | |
|---|---|---|
| Treatment | Total Mg Protein Per Coupon¹ | Protein Reduction (%) |
| None | 8.27 | |
| Vibriolysin + Neodol | 2.99 | 63.8 |

| | | |
|---|---|---|
| ¹ Average of values obtained from twelve coupons. | | |

The two towers containing the remaining fouled coupons from this example were transferred into two generators of fresh SCTW. Vibriolysin (1 U/ml) and Neodol 25-7 (0.01%) was then added to both generators. Vibriolysin was periodically added to maintain a constant protease concentration at 1 azocasein unit per ml. Agitation, aeration, pH and temperature were controlled as in Example 1 but no additional nutrients or bacterial inocula was added. After a two-day period, the biofilm remaining on 12 randomly selected coupons was determined as in Example 9.

**Table 9**

| In situ Removal of Biofilm Using Vibriolysin + Neodol | | | |
|---|---|---|---|
| | Initial Protein Conc. (Mg/Coupon)¹ | Final Protein Conc. (Mg/Coupon)¹ | % Removal |
| Experiment 1 | 2.99 | 1.61 | 46% |
| Experiment 2 | 8.27 | 3.58 | 57% |

| | | | |
|---|---|---|---|
| ¹ Average of values obtained from 12 coupons. | | | |

### Example 12

### Biofilm Removal by Sequential Treatments of Protease and Lipase

This example demonstrates the effect of sequential addition of protease and lipase enzyme treatments on heavily fouled coupons. The effectiveness of a treatment was determined by the difference between biofilm (protein) removal on untreated control coupons in synthetic cooling tower water (SCTW) (∼15 mg protein/coupon) and treated coupons. The total incubation time per single treatment (a) was 24 hours; whereas, the sequential treatment (b) incubation was a total of 48 hours. The results are provided in Table 10.

**Table 10**

| Treatment | Mg Protein Removed | % Protein Removed |
|---|---|---|
| (a) SCTW | | |
| (b) Esperase® (1 U/ml) + 0.05% Neodol 25-7 | 5.6 | 37 |
| (a) SCTW | | |
| (b) Lipolase (0.003 U/ml) | 1.6 | 11 |
| (a) Esperase® (1 U/ml) + 0.05% Neodol 25-7 | | |
| (b) Lipolase (0.003 U/ml) + 0.05% Neodol 25-7 | 9.8 | 66 |
| (a) Lipolase (0.003 U/ml) + 0.05% Neodol 25-7 | | |
| (b) Esperase® (1 U/ml) + 0.05% Neodol 25-7 | 5.2 | 35 |

The sequential treatment of coupons using Esperase®/Neodol followed by lipolase/Neodol resulted in a removal of protein from fouled coupons that was better than the additive effect of each enzyme alone. Unexpectedly, the converse was not effective (e.g., initial treatment with lipase followed by protease treatment).

### Example 13

### Biofilm Removal with Sequential Treatment of Enzymes

This example demonstrates the effect of sequential enzyme treatment on fouled coupons using protease and either carbohydrase or a mixture of lipase/carbohydrase. The data presented below represent the average of three separate experiments. The effectiveness of a treatment was determined by the difference between biofilm (protein) removal on untreated control coupons in synthetic cooling tower water (SCTW, ∼2.5 mg protein/coupon) and treated coupons. The total incubation time per treatment (a) was 24 hours; whereas, the sequential treatment incubation (b) was a total of 24 hours. The results are provided in Tables 11 and 12 below.

**Table 11**

| Effect of Sequential Enzyme Treatments Using Esperase and Carbohydrase | |
|---|---|
| Treatment¹ | % Total Protein Removed |
| (a) SCTW | |
| (b) Esperase® (0.7 U/ml) | 36 |
| (a) SCTW | |
| (b) carbohydrase (0.0006 U/ml) | 8 |
| (a) carbohydrase (0.0006 U/ml) | |
| (b) Esperase® (0.7 U/ml) | 40 |
| (a) Esperase® (0.7 U/ml) | |
| (b) carbohydrase (0.0006 U/ml) | 63 |

| | |
|---|---|
| ¹ For biofilm removal to be statistically significant, biofilm removal had to be >12% protein removal (0.3 mg). Coupons at a protein loading rate of 3 mg/coupon were incubated for 24 hr per single enzyme/SCTW treatment or a total of 48 hr; a and b represent sequential treatments. | |

**Table 12**

| Treatment | Mg Protein Removed (2) | % Protein Removed (2) |
|---|---|---|
| (a) SCTW | | |
| (b) Esperase® (1 U/ml) | 0.8 | 31 |
| (a) SCTW | | |
| (b) BAN 120L (0.006 U/ml) + Lipolase (0.003 U/ml) | 0.2 | 7 |
| (a) Esperase® (1 U/ml) | | |
| (b) BAN 120L (0.006 U/ml) + Lipolase (0.003 U/ml) | 1.4 | 56 |
| (a) BAN 120L (0.006 U/ml) + Lipolase (0.003 U/ml) | | |
| (b) Esperase® (1 U/ml) | 0.5 | 21 |

These results are consistent with those presented in Example 12. Namely, fouled surfaces must first be treated with protease followed by the second group of enzyme(s) to produce a greater than additive effect. Again the converse resulted in an unexpected result.

### Example 14

### Compatibility of Esperase® with Water Treatment Chemicals

This example demonstrates the stability of Esperase® activity in presence of water treatment chemicals including hypochlorite and scale and corrosion chemicals and further demonstrates that Esperase® effectively removes biofilm in the presence of the biocides as well. The results are provided in Tables 13 to 16. The efficacy of Esperase® in the presence of the other types of treatment chemicals would not be expected to exhibit any adverse effects given the robust nature of the enzyme.

**Table 13**

| Effect of Dearborn Water Treatment Chemicals on the Stability of Esperase® | | |
|---|---|---|
| | % Activity Remaining After: | |
| Treatment (1) | 24 Hr | 48 Hr |
| Esperase® (1 U/ml) | 107 | 121 |
| + 50 ppm Dispersant | 99 | 121 |
| + 250 ppm Dearborn A | 82 | 97 |
| + 75 ppm Dearborn B | 84 | 89 |
| + 150 ppm Dearborn C | 99 | 88 |
| + 0.05% Neodol 25-7 | 103 | 100 |
| + 0.05% Neodol 25-7 + 50 ppm Dispersant | 100 | 92 |
| + 0.05% Neodol 25-7 + 50 ppm Dearborn A | 96 | 105 |
| + 0.5% Neodol 25-7 + 75 ppm Dearborn B | 96 | 91 |
| + 0.5% Neodol 25-7 + 150 Dearborn C | 114 | 113 |
| + 5 ppm NaClO + 0.05% Neodol 25-7 | 5 | 5 |
| + 5 ppm NaClO + 0.05% Neodol 25-7 + 50 ppm Dispersant | 13 | 13 |
| + 5 ppm NaClO + 0.05% Neodol 25-7 + 250 ppm Dearborn A | 3 | 5 |
| + 5 ppm NaClO + 0.05% Neodol 25-7 + 75 ppm Dearborn B | 3 | 3 |
| + 5 ppm NaClO + 0.05% Neodol 25-7 + 150 ppm Dearborn C | 63 | 52 |

| | | |
|---|---|---|
| (1) The above dispersant is an amide-type dispersant, and Dearborn A, Dearborn B and Dearborn C contain blends of organic sequestrants, dispersants, and corrosion inhibitors. The incubation temperature was 40°C. | | |

**Table 14**

| Effect of Different Water Treatment Chemicals on Biofilm Removal⁽¹⁾ | | |
|---|---|---|
| Treatment | Mg Protein Removed⁽²⁾ | % Protein Removed |
| 0.05% Neodol 25-7 | 0.2 | 6 |
| 150 ppm Dearborn C | 0 | 0 |
| 75 ppm Dearborn B | 0 | 0 |
| 250 ppm Dearborn A | 0.2 | 6 |
| 50 ppm Dispersant | 0 | 0 |
| Esperase® (1 U/ml) + 0.05% Neodol | 0.8 | 23 |
| Esperase® (1 U/ml) + 0.05% Neodol + 150 ppm Dearborn C | 1.0 | 30 |
| Esperase® (1 U/ml) + 0.05% Neodol + 75 ppm Dearborn B | 0.9 | 29 |
| Esperase® (1 U/ml) + 0.05% Neodol + 250 ppm Dearborn A | 1.7 | 52 |
| Esperase® (1 U/ml) + 0.05% Neodol + 50 ppm Dispersant | 0.6 | 17 |

| | | |
|---|---|---|
| (1) The dispersant, Dearborn A, Dearborn B and Dearborn C are as defined in Table 13. The incubation temperature was 40°C. | | |
| (2) For biofilm removal to be statistically significant, protein removal had to be ≥0.4 mg protein (12%). | | |

**Table 15**

| Compatibility of Esperase® with Selected Dearborn Biocides | | |
|---|---|---|
| | % Activity Remaining | |
| Treatment⁽¹⁾ | 24 Hr | 48 Hr |
| 1 U/ml Esperase® + 0.05% Neodol 25-7 | 102 | 106 |
| + 250 ppm Biocide A | 96 | 93 |
| + 100 ppm Biocide B | 101 | 102 |
| + 100 ppm Biocide C | 150 | 116 |
| + 120 ppm Biocide D | 73 | 64 |
| + 150 ppm Biocide E | 99 | 94 |
| + 200 ppm Biocide F | 89 | 150 |
| + 12 ppm Biocide G | 94 | 91 |
| + 125 ppm Biocide H | 91 | 109 |

| | | |
|---|---|---|
| ⁽¹⁾ incubation temperature was 40°C. | | |

**Table 16**

| Effect of Enzyme Treatment on Fouled Coupons in Combination with Dearborn Biocides | | |
|---|---|---|
| Treatment⁽¹⁾ | Mg Protein Removed⁽²⁾ | % Protein Removed⁽²⁾ |
| 1 U/ml Esperase® | 2.3 | 33 |
| 250 ppm Biocide A | 0.4 | 5 |
| 120 ppm Biocide D | 0.8 | 11 |
| 150 ppm Biocide E | 0.6 | 9 |
| 1 U/ml Esperase® + 250 ppm Biocide A | 3.0 | 43 |
| 1 U/ml Esperase® + 120 ppm Biocide D | 2.7 | 38 |
| 1 U/ml Esperase® + 150 ppm Biocide E | 2.5 | 36 |

| | | |
|---|---|---|
| ⁽¹⁾ The active constituents of each biocide listed in Tables 15 and 16 are provided below. All enzyme treatments included the addition of 0.05% Neodol 25-7 except for treatment with SCTW. | | |
| ⁽²⁾ For biofilm removal to be statistically significant, protein removal had to be ≥0.8 mg protein (12% removal). | | |

- Biocide A -: 5-chloro-2-methyl-4-isothiazolin-3-one, 2-methyl-4-isothiazdin-3-one
- Biocide B -: N-alkyl-1,3-propanediamine
- Biocide C -: methylene bis-(thiocyanate)
- Biocide D -: sodium dimethyldithiocarbamate, disodium ethylene bis (dithiocarbamate)
- Biocide E -: alkyl dimethylbenzyl ammonium chloride, bis(tri-n-butyltin) oxide
- Biocide F -: poly[oxyethylene(dimethylimino)ethylene (dimethylimino)ethylene dichloride]
- Biocide G -: 2,2-dibromo-3-nitrilopropionamide
- Biocide H -: N-alkyl dimethylbenzyl ammonium chloride bis(tri-w-butyltin) oxide, N-alkyl 1,3-propanediamine

### Example 15

### Compatability of Vibriolysin and Alcalase® with Water Treatment Chemicals

This example demonstrates the stability of vibriolysin's activity in presence of water treatment chemicals including hypochlorite and scale and corrosion chemicals and further demonstrates that vibriolysin effectively removes biofilm in the presence of the biocides as well. The results are provided in Tables 17-19. The efficacy of vibriolysin in the presence of the other types of treatment chemicals would not be expected to exhibit any adverse effects given the robust nature of the enzyme.

Stability data for Alcalase® in the presence of various biocides are presented in Table 20. Studies on biofilm removal in the presence of these compounds have not been performed although, given the similarity between Esperase® and Alcalase®, comparable performance is expected.

**Table 17**

| Effect of Dearborn Water Treatment Chemicals on the stability of Vibriolysin^{(a)} | | |
|---|---|---|
| | % Activity Remaining After: | |
| Treatment^{(b)} | 24 Hr | 48 Hr |
| None | 68 | 64 |
| Dispersant | 69 | 64 |
| Dearborn A | 69 | 66 |
| Dearborn B | 66 | 70 |
| Dearborn C | 76 | 67 |
| Neodol 25-7 | 67 | 63 |
| Neodol 25-7 + Dispersant | 77 | 71 |
| Neodol 25-7 + Dearborn A | 87 | 78 |
| Neodol 25-7 + Dearborn B | 82 | 68 |
| Neodol 25-7 + Dearborn C | 76 | 63 |
| Neodol 25-7 + NaCl0 | 84 | 84 |
| Dispersant + Neodol 25-7 + NaCl0 | 82 | 75 |
| Dearborn A + Neodol 25-7 + NaCl0 | 80 | 77 |
| Neodol 25-7 + Dearborn B + NaCl0 | 78 | 83 |
| Neodol 25-7 + Dearborn C + NaCl0 | 73 | 74 |

| | | |
|---|---|---|
| (a) Vibriolysin (20 U/ml) was incubated at 40°C in SCTW containing various water treatment chemicals; samples were removed and assayed for residual activity using the azocasein assay. | | |
| (b) Concentrations of water treatment chemicals were as follows: Dispersant (50 ppm), Dearborn A (250 ppm), Dearborn B (75 ppm), Dearborn C (150 ppm), Neodol 25-7 (0.05%) and NaCl0 (5 ppm). | | |

**Table 18**

| Compatibility of Vibriolysin with Selected Dearborn Biocides | | |
|---|---|---|
| Treatment^{(c)} | % Activity Remaining | |
| | 24 Hr | 48 Hr |
| **Experiment 1**^{**(a)**} | | |
| None | 73 | 62 |
| Biocide A | 75 | 71 |
| Biocide B | 72 | 68 |
| Biocide C | 86 | 83 |
| Biocide D | 92 | 81 |
| Biocide E | 73 | 75 |
| Biocide F | 72 | 71 |
| Biocide G | 75 | 64 |
| Biocide H | 78 | 74 |

| **Experiment 2**^{**(b)**} | | |
|---|---|---|
| None | 77 | 69 |
| Biocide A | 70 | 64 |
| Biocide B | 69 | 66 |
| Biocide C | 81 | 78 |
| Biocide D | 79 | 70 |
| Biocide E | 80 | 80 |
| Biocide F | 81 | 70 |
| Biocide G | 77 | 71 |
| Biocide H | 79 | 73 |

| | | |
|---|---|---|
| (a) Vibriolysin (1U/ml) was incubated in SCTW containing 0.05% Neodol 25-7 at 40°C in the presence or absence of biocides. | | |
| (b) Vibriolysin (20 U/ml) was incubated in SCTW containing 0.05% Neodol 25-7 and 5 ppm NaCL0 in the presence or absence of biocides. | | |
| (c) Biocide concentrations were as follows: A (250 ppm), B (100 ppm), C (100 ppm), D (120 ppm), E (150 ppm), F (200 ppm), G (12 ppm) and H (125 ppm). | | |

**Table 19**

| Effect of Dearborn Water Treatment Chemicals on the Efficacy of Vibriolysin^{(a)} | | | |
|---|---|---|---|
| Experiment | Treatment | Dry Weight (Avg. mg per coupon) | % Protein Removed |
| 1^{(b)} | No Enzyme | 7.83 | - |
| | Biocide A | 5.67 | 27.6 |
| | Biocide D | 5.18 | 33.8 |
| | Biocide E | 5.52 | 29.5 |
| | Neodol | 5.30 | 32.5 |
| | Neodol + Biocide A | 5.14 | 34.4 |
| | Neodol + Biocide D | 4.46 | 43.0 |
| | Neodol + Biocide E | 4.96 | 36.7 |
| 2^{(c)} | No Enzyme | 6.65 | - |
| | Biocide A | 4.54 | 30.7 |
| | Biocide D | 4.20 | 35.9 |
| | Biocide E | 4.79 | 26.9 |
| | Neodol | 3.76 | 42.6 |
| | Neodol + Biocide A | 3.78 | 42.3 |
| | Neodol + Biocide D | 3.54 | 46.0 |
| | Neodol + Biocide E | 3.87 | 40.9 |

| | | | |
|---|---|---|---|
| (a) Vibriolysin (1 U/ml) was added to fouled coupons in SCTW and assessment for biofilm removal in the presence or absence of water treatment chemicals was determined. Concentrations of biocides and Neodol was those described in Table 18. | | | |
| (b) For biofilm removal to be statistically significant, protein removal has to be ≥0.9 mg or 11.5% removal. | | | |
| (c) For biofilm removal to be statistically significant, protein removal had to be ≥0.48 mg or 7.3% removal. | | | |

**Table 20**

| Effect of Water Treatment Chemicals on the Stability of Alcalase^{(a)}® | | |
|---|---|---|
| | % Activity Remaining at: | |
| Treatment ^{(b)} | 30 Hours | 48 Hours |
| None | 74 | 51 |
| Biocide A | 77 | 57 |
| Biocide D | 75 | 56 |
| Biocide E | 77 | 62 |
| Biocide G | 69 | 56 |

| | | |
|---|---|---|
| (a) Alcalase® (20 U/ml) was incubated in SCTW containing 0.05% Neodol 25-7 at 40°C in the presence or absence of biocides; samples were removed and assayed for residual activity using the standard azocasein assay. | | |
| (b) Concentration of biocides were as described in Table 18. | | |

## Claims

1. A method for inhibiting or removing biofilm deposits on surfaces which are in contact with an aqueous system comprising adding to the system an enzyme composition consisting essentially of protease in a dosage amount which is effective to inhibit or remove biofilm deposits, wherein the protease is Esparase® or a metalloprotease selected from the group of vibriolysin, Thermoase, Neutrase® and mixtures thereof.

2. A method according to claim 1, wherein the dosage amount of protease is in the range of 0.0001 U/ml to 100 U/ml.

3. A method according to claim 1, wherein the dosage amount of protease is in the range of 0.0005 U/ml to 1 U/ml.

4. A method according to claim 1, wherein the enzyme composition is added to the aqueous system in combination with one or more water treatment agents selected from the group consisting of biocides, surfactants, corrosion inhibitors, scale inhibitors, dispersants, chelants, polymeric agents, phosphates, polyphosphates, silicates, buffers, carboxylates, sulfonates and optical brightening agents.

5. A composition for inhibiting or removing biofilm deposits on surfaces which are in contact with an aqueous system comprising protease and a surfactant in a ratio of unit of protease activity : weight of surfactant in the range of 0.001:1 to 100:1, which composition does not contain amylase.

6. A method for inhibiting or removing biofilm deposits on surfaces which are in contact with an aqueous system comprising adding to the system a composition consisting of a protease and a surfactant, in a dosage amount which is effective to inhibit or remove the biofilm deposit, which composition does not contain amylase.

7. A method according to claim 6 wherein the protease is selected from the group consisting of serine proteases, metalloproteases, cysteine proteases, aspartic proteases and mixtures thereof.

8. A method according to claim 7 wherein the protease is a serine protease selected from the group consisting of Esperase®, Alcalase®, subtilisin, Maxatase®, Maxacal®, and trypsin.

9. A method according to claim 8 wherein the protease is Esperase®.

10. A method according to claim 8 wherein the protease is Alcalase®.

11. A method according to claim 7 wherein the protease is a metalloprotease selected from the group consisting of vibriolysin, thermolysin, Thermoase, Novo TS, Neutrase®, SP-369, Protease 2A, Seaprose 5, Prozyme 6®, and mixtures thereof.

12. A method according to claim 11 wherein the protease is vibriolysin.

13. A method according to claim 6 wherein the dosage amount of protease is in the range of 0.0001 U/ml to 100 U/ml.

14. A method according to claim 6 wherein the dosage amount of protease is in the range 0.0005 U/ml to 1 U/ml.

15. A method according to claim 6 wherein the enzyme composition is added to the aqueous system in combination with one or more water treatment agents selected from the group consisting of biocides, surfactants, corrosion inhibitors, scale inhibitors, dispersants, chelants, polymeric agents, phosphates, polyphosphates, silicates, buffers, carboxylates, sulfonates and optical brightening agents.

16. A method for inhibiting or removing biofilm deposits from surfaces which are in contact with an aqueous system which comprises the sequential steps of 1) adding to the aqueous system an enzyme composition consisting essentially of proteases, 2) circulating the enzyme composition through the aqueous system to permit contact of the enzyme composition with the biofilm deposits, and 3) adding at least one lipase, carbohydrase or mixture thereof to the aqueous system, and wherein the enzyme composition and the lipase, carbohydrase or mixture thereof are added in amounts sufficient to inhibit or remove the biofilm deposits.

17. A method according to claim 16 wherein the enzyme composition is added to the aqueous system in combination with one or more water treatment agents selected from the group consisting of biocides, surfactants, corrosion inhibitors, scale inhibitors, dispersants, chelants, polymeric agents, phosphates, polyphosphates, silicates, buffers, carboxylates, sulfonates and optical brightening agents.

18. A method according to claim 16 wherein the dosage amount of the protease is in the range 0.0001 U/ml to 100 U/ml.

19. A method according to claim 16 wherein the dosage amount of the protease is in the range 0.0005 U/ml to 1 U/ml.

20. A method according to claim 16 wherein the dosage amount of the lipase, carbohydrase or mixtures thereof is in the range 0.0001 U/ml to 100 U/ml.

21. A method according to claim 16 wherein the dosage amount of the lipase, carbohydrase or mixtures thereof is in the range 0.0005 U/ml to 1 U/ml.

## Patentansprüche

1. Verfahren zur Hemmung oder Entfernung von Biofilm-Ablagerungen auf Oberflächen, die mit einem wäßrigen System in Kontakt stehen, bei dem man eine Enzym-Zusammensetzung, die im wesentlichen aus Protease besteht in einer Menge zu dem System gibt, die ausreicht, um Biofilm-Ablagerungen zu hemmen oder zu entfernen, wobei die Protease Esparase® oder eine Metalloprotease ausgewählt aus der Gruppe Vibriolysin, Thermoase, Neutrase® und Mischungen ist.

2. Verfahren nach Anspruch 1, bei dem die Dosierungsmenge an Protease im Bereich von 0,0001 E/ml bis 100 E/ml liegt.

3. Verfahren nach Anspruch 1, bei dem die Dosierungsmenge an Protease in einem Bereich von 0,0005 E/ml bis 1 E/ml liegt.

4. Verfahren nach Anspruch 1, bei dem die Enzym-Zusammensetzung dem wäßrigen System zusammen mit einem oder mehreren Agenzien zur Behandlung von Wasser zugegeben wird, die aus der Gruppe bestehend aus Biozide, Tenside, Korrosionsinhibitoren, Kieselstein-Inhibitoren, Dispersionsmittel, Chelatbildnern, polymeren Agenzien, Phosphaten, Polyphosphaten, Silikaten, Puffern, Carboxylaten, Sulfonaten und optischen Aufhellmitteln ausgewählt sind.

5. Zusammensetzung zur Hemmung oder Entfernung von Biofilm-Ablagerungen auf Oberflächen, die mit wäßrigen Systemen in Kontakt stehen, die Protease und ein Tensid in einem Verhältnis der Einheiten von Proteaseaktivität : Gewicht des Tensids im Bereich von 0,001 : 1 bis 100 : 1 aufweist, wobei die Zusammensetzung keine Amylase enthält.

6. Verfahren zur Hemmung oder Entfernung von Biofilm-Ablagerungen auf Oberflächen, die mit einem wäßrigen System in Kontakt stehen, bei dem man zu dem System eine Zusammensetzung gibt, die eine Protease und ein Tensid in einer Dosierung - enthält, die ausreicht, um die Ablagerung von Biofilm zu hemmen oder zu entfernen, wobei die Zusammensetzung keine Amylase enthält.

7. Verfahren nach Anspruch 6, bei dem die Protease aus der Gruppe bestehend aus Serin-Proteasen, Metalloproteasen, Cystein-Proteasen, Aspartat-Proteasen und Mischungen dieser ausgewählt ist.

8. Verfahren nach Anspruch 7, bei dem die Protease eine Serin-Protease ist, die aus der Gruppe bestehend aus Esparase®, Alcalase®, Subtilisin, Maxatase®, Maxacal®, und Trypsin ausgewählt ist.

9. Verfahren nach Anspruch 8, bei dem die Protease Esparase® ist.

10. Verfahren nach Anspruch 8, bei dem die Protease Alcalase® ist.

11. Verfahren nach Anspruch 7, bei dem die Protease eine Metalloprotease ist, die aus der Gruppe bestehend aus Vibriolysin, Thermolysin, Thermoase, Novo TS, Neutrase®, SP-369, Protease 2A, Seaprose 5, Prozyme 6® und Mischungen davon ausgewählt ist.

12. Verfahren nach Anspruch 11, bei dem die Protease Vibriolysin ist.

13. Verfahren nach Anspruch 6, bei dem die Dosierungsmenge an Protease im Bereich von 0,0001 E/ml bis 100 E/ml liegt.

14. Verfahren nach Anspruch 6, bei dem die Dosierungsmenge an Protease im Bereich von 0,0005 E/ml bis 1 E/ml liegt.

15. Verfahren nach Anspruch 6, bei dem die Enzym-Zusammensetzung dem wäßrigen System in Verbindung mit einem oder mehreren Agenzien zur Behandlung von Wasser zugegeben wird, die aus der Gruppe bestehend aus Bioziden, Tensiden, Korrosionsinhibitoren, Kesselstein-Inhibitoren, Dispersionsmittel, Chelatbildnern, polymeren Agenzien, Phosphaten, Polyphosphaten, Silikaten, Puffern, Carboxylaten, Sulfonaten und optischen Aufhellmitteln ausgewählt sind.

16. Verfahren zur Hemmung oder Entfernung von Biofilm-Ablagerungen auf Oberflächen, die mit einem wäßrigen System in Kontakt stehen, bei dem man nacheinander 1) eine Enzym-Zusammensetzung zu dem wäßrigen System gibt, die im wesentlichen aus Proteasen besteht, 2) die Enzym-Zusammensetzung durch das wäßrige System zirkulieren läßt, um einen Kontakt der Enzym-Zusammensetzung mit den Biofilm-Ablagerungen zu ermöglichen, und 3) wenigstens eine Lipase, Carbohydrase oder eine Mischung davon zu dem wäßrigen System gibt, wobei die Enzym-Zusammensetzung und die Lipase, Carbohydrase oder Mischung davon in Mengen zugegeben werden, die ausreichen, um die Biofilm-Ablagerungen zu hemmen oder zu entfernen.

17. Verfahren nach Anspruch 16, bei dem die Enzym-Zusammensetzung dem wäßrigen System in Verbindung mit einem oder mehreren Agenzien zur Behandlung von Wasser zugegeben wird, die aus der Gruppe bestehend aus Biozide, Tenside, Korrosionsinhibitoren, Kesselstein-Inhibitoren, Dispersionsmittel, Chelatbildnern, polymeren Agenzien, Phosphaten, Polyphosphaten, Silikaten, Puffern, Carboxylaten, Sulfonaten und optischen Aufhellmitteln ausgewählt sind.

18. Verfahren nach Anspruch 16, bei dem die Dosierungsmenge an Protease im Bereich von 0,0001 E/ml bis 100 E/ml liegt.

19. Verfahren nach Anspruch 16, bei dem die Dosierungsmenge an Protease im Bereich von 0,0005 E/ml bis 1 E/ml liegt.

20. Verfahren nach Anspruch 16, bei dem die Dosierungsmenge an Lipase, Carbohydrase oder Mischungen derselben im Bereich von 0,0001 E/ml bis 100 E/ml liegt.

21. Verfahren nach Anspruch 16, bei dem die Dosierung der Menge an Lipase, Carbohydrase oder deren Mischung im Bereich von 0,0005 E/ml bis 1 E/ml beträgt.

## Revendications

1. Procédé pour inhiber la formation de dépôts de film biologique ou éliminer ces dépôts sur des surfaces qui sont en contact avec un système aqueux comprenant l'addition au système d'une composition d'enzymes consistant essentiellement en protéase en une quantité qui est efficace pour inhiber la formation de dépôts de film biologique ou les éliminer, dans lequel la protéase est l'Esparase® ou une métalloprotéase choisie dans le groupe consistant en vibriolysine, Thermoase, Neutrase® et leurs mélanges.

2. Procédé suivant la revendication 1, dans lequel la quantité de protéase est comprise dans la gamme de 0,0001 U/ml à 100 U/ml.

3. Procédé suivant la revendication 1, dans lequel la quantité de protéase est comprise dans la gamme de 0,0005 U/ml à 1 U/ml.

4. Procédé suivant la revendication 1, dans lequel la composition d'enzymes est ajoutée au système aqueux en combinaison avec un ou plusieurs agents pour le traitement de l'eau choisis dans le groupe consistant en biocides, tensioactifs, inhibiteurs de corrosion, inhibiteurs de tartre, dispersants, chélateurs, agents polymères, phosphates, polyphosphates, silicates, tampons, carboxylates, sulfonates et agents aviveurs optiques.

5. Composition pour inhiber la formation de dépôts de film biologique ou éliminer ces dépôts sur des surfaces qui sont en contact avec un système aqueux comprenant une protéase et un tensioactif selon un rapport d'unité d'activité protéase à poids de tensioactif compris dans la gamme de 0,001:1 à 100:1, laquelle composition ne contient pas d'amylase.

6. Procédé pour inhiber la formation de dépôts de film biologique ou éliminer ces dépôts sur des surfaces qui sont en contact avec un système aqueux comprenant l'addition au système d'une composition consistant en une protéase et un tensioactif, en une quantité qui est efficace pour inhiber la formation d'un dépôt de film biologique ou l'éliminer, laquelle composition ne contient pas d'amylase.

7. Procédé suivant la revendication 6, dans lequel la protéase est choisie dans le groupe consistant en sérine protéases, métalloprotéases, cystéine protéases, protéases aspartiques et leurs mélanges.

8. Procédé suivant la revendication 7, dans lequel la protéase est une sérine protéase choisie dans le groupe consistant en Esperase®, Alcalase®, subtilisine, Maxatase®, Maxacal® et trypsine.

9. Procédé suivant la revendication 8, dans lequel la protéase est l'Esperase®.

10. Procédé suivant la revendication 8, dans lequel la protéase est l'Alcalase®.

11. Procédé suivant la revendication 7, dans lequel la protéase est une métalloprotéase choisie dans le groupe consistant en vibriolysine, thermolysine, Thermoase, Novo TS, Neutrase®, SP-369, Protease 2A, Seaprose 5, Prozyme 6® et leurs mélanges.

12. Procédé suivant la revendication 11, dans lequel la protéase est la vibriolysine.

13. Procédé suivant la revendication 6, dans lequel la quantité de protéase est comprise dans la gamme de 0,0001 U/ml à 100 U/ml.

14. Procédé suivant la revendication 6, dans lequel la quantité de protéase est comprise dans la gamme de 0,0005 U/ml à 1 U/ml.

15. Procédé suivant la revendication 6, dans lequel la composition d'enzymes est ajoutée au système aqueux en combinaison avec un ou plusieurs agents pour le traitement de l'eau choisis dans le groupe consistant en biocides, tensioactifs, inhibiteurs de corrosion, inhibiteurs de tartre, dispersants, chélateurs, agents polymères, phosphates, polyphosphates, silicates, tampons, carboxylates, sulfonates et agents aviveurs optiques.

16. Procédé pour inhiber la formation de dépôts de film biologique ou éliminer ces dépôts sur des surfaces qui sont en contact avec un système aqueux, qui comprend les étapes successives :
(1) d'addition au système aqueux d'une composition d'enzymes consistant essentiellement en protéases,
(2) de circulation de la composition d'enzymes à travers le système aqueux pour permettre un contact de la composition d'enzymes avec les dépôts de film biologique, et
(3) d'addition d'au moins une lipase, une carbohydrase ou leur mélange au système aqueux, et dans lequel la composition d'enzymes et la lipase, la carbohydrase ou leur mélange sont ajoutés en des quantités suffisantes pour inhiber la formation de dépôts de film biologique ou éliminer ces dépôts.

17. Procédé suivant la revendication 16, dans lequel la composition d'enzymes est ajoutée au système aqueux en combinaison avec un ou plusieurs agents pour le traitement de l'eau choisis dans le groupe consistant en biocides, tensioactifs, inhibiteurs de corrosion, inhibiteurs de tartre, dispersants, chélateurs, agents polymères, phosphates, polyphosphates, silicates, tampons, carboxylates, sulfonates et agents aviveurs optiques.

18. Procédé suivant la revendication 16, dans lequel la quantité de la protéase est comprise dans la gamme de 0,0001 U/ml à 100 U/ml.

19. Procédé suivant la revendication 16, dans lequel la quantité de la protéase est comprise dans la gamme de 0,0005 U/ml à 1 U/ml.

20. Procédé suivant la revendication 16, dans lequel la quantité de la lipase, de la carbohydrase ou de leurs mélanges est comprise dans la gamme de 0,0001 U/ml à 100 U/ml.

21. Procédé suivant la revendication 16, dans lequel la quantité de la lipase, de la carbohydrase ou de leurs mélanges est comprise dans la gamme de 0,0005 U/ml à 1 U/ml.
